(19) **Europäisches Patentamt**
**European Patent Office**
**Office européen des brevets**

(11) **EP 3 059 694 B1**

(12) **EUROPEAN PATENT SPECIFICATION**

(45) Date of publication and mention
of the grant of the patent:
**06.06.2018 Bulletin 2018/23**

(51) Int Cl.:
**G06F 21/56** *(2013.01)* **H04L 29/06** *(2006.01)*

(21) Application number: **15171336.9**

(22) Date of filing: **10.06.2015**

(54) **SYSTEM AND METHOD FOR DETECTING FRAUDULENT ONLINE TRANSACTIONS**

SYSTEM UND VERFAHREN ZUR DETEKTION VON BETRÜGERISCHEN
ONLINE-TRANSAKTIONEN

SYSTÈME ET PROCÉDÉ DE DÉTECTION DE FRAUDE DANS DES TRANSACTIONS EN LIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2015 RU 2015105806
26.05.2015 US 201514721872**

(43) Date of publication of application:
**24.08.2016 Bulletin 2016/34**

(73) Proprietor: **Kaspersky Lab, ZAO
Moscow 125212 (RU)**

(72) Inventor: **Kolotinsky, Evgeny B.
125212 Moscow (RU)**

(74) Representative: **Sloboshanin, Sergej et al
V. Füner Ebbinghaus Finck Hano
Patentanwälte
Mariahilfplatz 3
81541 München (DE)**

(56) References cited:
**US-A1- 2013 347 114 US-A1- 2014 164 178
US-A1- 2014 359 761**

- **White Paper: "DETECTING SOPHISTICATED
ONLINE ATTACKS WITH STREAMING
ANALYTICS RSA Web Threat Detection
Operationalizes Big Data to Provide Real-Time
Protection from Business Logic Abuse
Threats", , 6 June 2013 (2013-06-06),
XP055208962, Retrieved from the Internet:
URL:http://www.emc.com/collateral/white-pa
pers/h12816-wp-detecting-sophisticated-onl
ine-attacks.pdf [retrieved on 2015-08-21]**
- **Hideaki Shimazaki ET AL: "A recipe for optimizing
a time-histogram", , 1 January 2006 (2006-01-01),
XP055208557, Retrieved from the Internet:
URL:http://papers.nips.cc/paper/3140-a-rec
ipe-for-optimizing-a-time-histogram.pdf
[retrieved on 2015-08-19]**

## Description

## Field of Technology

The present disclosure relates generally to the field of computer security, and more specifically to a system and method of detecting fraudulent online transactions.

## Background

US 2014/359761 A1 describes malware detection techniques that detect malware by identifying the C&C communication between the malware and the remote host, and distinguish between communication transactions that carry C&C communication and transactions of innocent traffic. A system distinguishes between malware transactions and innocent transactions using malware identification models, which it adapts using machine learning algorithms. However, the number and variety of malicious transactions that can be obtained from the protected network are often too limited for effectively training the machine learning algorithms. Therefore, the system obtains additional malicious transactions from another computer network that is known to be relatively rich in malicious activity. The system is thus able to adapt the malware identification models based on a large number of positive examples.

US 2014/164178 A1 describes a real-time fraud prevention system that enables merchants and commercial organizations on-line to assess and protect themselves from high-risk users. A centralized database is configured to build and store dossiers of user devices and behaviors collected from subscriber websites in real-time. Real, low-risk users have webpage click navigation behaviors that are assumed to be very different than those of fraudsters. Individual user devices are distinguished from others by hundreds of points of user-device configuration data each independently maintains. A client agent provokes user devices to volunteer configuration data when a user visits respective webpages at independent websites. A collection of comprehensive dossiers of user devices is organized by their identifying information, and used calculating a fraud score in real-time.

US 2013/347114 A1 describes systems and methods for malware detection techniques, which detect malware by identifying the C&C communication between the malware and the remote host. In particular, the disclosed techniques distinguish between request-response transactions that carry C&C communication and request-response transactions of innocent traffic. Individual request-response transactions may be analyzed rather than entire flows, and fine-granularity features examined within the transactions. As such, these methods and systems are highly effective in distinguishing between malware C&C communication and innocent traffic, i.e., in detecting malware with high detection probability and few false alarms.

Today, there are a large number of software applications that can be used to perform various online transactions. Many transactions are carried out with the aid of online banking, using standard browsers, and separate banking clients are also used, being especially popular on mobile platforms. When using a browser to perform a transaction, the user generally goes to the bank site and performs an authorization (which is sometimes a two-factor type, for example, using an SMS or token), after which the user is able to perform operations with his funds.

Not surprisingly, with the growth of online payments, hackers have become increasingly interested in this service area, actively exploring ways to intercept transaction data so as to unlawfully transfer funds. The theft of data is generally done using a malicious program that is installed onto a computer of a user, thus infecting the computer. Most often, such programs infect computers via popular Internet browsers; wherein data may be intercepted as it is entered via input devices (such as keyboard or mouse) or when it is transmitted to the web browser. For example, malicious programs that infect browsers gain access to browser files, history of web page visits and user passwords for visited web pages. Keyloggers intercept the entry of data from keyboard or mouse, take screenshots, and hide their presence in the system by means of a whole range of rootkit technologies. Similar technologies are also used to intercept network packets (traffic sniffers), which intercept network packets being transmitted and extract valuable information from them, such as passwords and other personal data. It should be appreciated that the infection occurs most often by utilizing vulnerabilities in the software, making possible the use of various exploits to get into the computer system.

Existing antivirus technologies, such as the use of signature matching, heuristic analysis, proactive protection or the use of lists of trusted applications (i.e., whitelists), although being able to detect many malicious programs on the computers of users, are not always able to identify many of their new modifications or variations of viruses, which are appearing with increasing frequency. Thus, solutions are needed that can ensure that online transactions, such as online payments, are safe for users.

Given the growing number of hacking attacks on online services and transactions, banks are using their own ways of verifying authenticity of online transactions. One such verification is based on analysis of data being entered by the user in order to identify the working of malicious programs (e.g., bots). For example, some systems detect fraud based on anomalies associated with an excessively high value of a particular data entry parameter. Other systems may detect fraud based on an excessively large change in certain parameters (such as the number of transactions carried out).

However, conventional systems do not provide a way of detecting and handling false positives (errors of the first kind), yet the quality of the service provided by financial organization (e.g., banks, e-commerce websites) depends directly on the number of such errors. Therefore, there is a need for improved systems and methods of detecting fraudulent online transactions.

## Summary

It is the object of the present invention to provide a possibility for optimizing detection of fraudulent online transactions. This object is achieved by the subject matter of the independent claims. Preferred embodiment are defined in the sub claims.

The disclosed system and method optimizes detection of fraudulent online transactions. In one example, a method for detecting fraudulent transactions includes: receiving, by a communication interface, data relating to an electronic transaction, including at least one of user actions data and malware actions data; analyzing, by a hardware processor, the data to determine whether the electronic transaction is a possible fraudulent transaction based on a predetermined algorithm stored in an electronic memory; determining, by the hardware processor, whether the possible fraudulent transaction is a legitimate electronic transaction; and adjusting, by the hardware processor, operating parameters of the predetermined algorithm if the hardware processor determines that the possible fraudulent transaction is a legitimate electronic transaction.

In another example, the data relating to an electronic transaction is a number of events performed by a computer executing the requested electronic transaction during a predetermined time period.

In another example, the events performed by the computer can include at least one of a number of activations of keys on a keyboard, a number of activations of buttons of a computer mouse, a trajectory of movement of the mouse or a track ball, downloading of web pages, a frequency of selecting links on the web pages, a timing of keystrokes, and a presence and correction of errors during keystrokes.

In another example, the predetermined time period is at least one of the operating parameters of the predetermined algorithm.

In another example, the method includes adjusting the operating parameters by calculating an average frame value by dividing an average duration of time of the electronic transaction performed by the computer by the number of events performed by the computer; calculating a minimum frame value by dividing a minimum duration of time of the electronic transaction performed by the computer by a number of events performed by the computer; calculating respective reciprocals of the average frame value and the minimum frame value; and updating the predetermined time period as an average value of respective calculated reciprocals.

In another example, the method includes adjusting the operating parameters by dividing time of the electronic transaction performed by the computer into a plurality of frames of equal duration; counting the number of events in each of the plurality of frames; calculating an average value and a dispersion of the number of events in each of the plurality of frames; calculating a cost function according to the following formula:

$$C_n(\Delta) = \frac{2k - v}{(n\Delta)^2},$$

wherein k is the average value, v is the dispersion, $\Delta$ is the duration of each of the plurality of frames, and $n$ is a number of adjustments to the predetermined algorithm; and updating the predetermined time period to minimize the calculated cost function.

In another example, the method includes adjusting the operating parameters by setting a time of the electronic transaction performed by the computer as a single frame; counting the number of events in the single frame; if the number of events is greater than 0, dividing the single frame into two equal frames; continuously dividing each of the two equal frames into two additional equal frames, respectively, until one of the additional equal frames has zero number of events; and updating the predetermined time period based on a frame size of the one additional equal frames that has zero number of events.

In another example a system is disclosed for detecting fraudulent transactions, the system including a communication interface configured to data relating to an electronic transaction; and a hardware processor configured to analyze the data to determine whether the electronic transaction is a possible fraudulent transaction based on a predetermined algorithm stored in an electronic memory, determine whether the possible fraudulent transaction is a legitimate electronic transaction, and, adjust operating parameters of the predetermined algorithm if the hardware processor determines that the possible fraudulent transaction is a legitimate electronic transaction.

In another example, a non-transitory computer readable medium is disclosed for storing computer executable instructions for detecting fraudulent transactions, including instructions for: receiving, by a communication interface, data relating to an electronic transaction; analyzing, by a hardware processor, the data to determine whether the electronic transaction is a possible fraudulent transaction based on a predetermined algorithm stored in an electronic memory; determining, by the hardware processor, whether the possible fraudulent transaction is a legitimate electronic transaction; and adjusting, by the hardware processor, operating parameters of the predetermined algorithm if the hardware processor determines that the possible fraudulent transaction is a legitimate electronic transaction.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and particularly pointed out in the claims.

**Brief Description of the Drawings**

The accompanying drawings, which are incorporated into and constitute a part of this specification, illustrate one or more example aspects of the present disclosure and, together with the detailed description, serve to explain their principles and implementations.

Fig. 1 illustrates a histogram of example user actions for online transactions.
Fig. 2 illustrates an exemplary system for identifying false positives in the detection of fraudulent online transactions.
Fig. 3 illustrates an exemplary method of identifying false positives in the detection of fraudulent online transactions.
Fig. 4 illustrates an example of a general-purpose computer system (which may be a personal computer or a server) on which the disclosed systems and method can be implemented according to an example aspect.

**Detailed Description**

The disclosed system and method eliminates the drawbacks of conventional solutions for preventing online fraud and identification of false positives in the detection of fraudulent online transactions. Example aspects are described herein in the context of a system, method and computer program product for detecting fraudulent transactions on a computer. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

In general, a computer user attempting to make an online purchase or perform a series of actions with his funds on a banking website will perform a series of actions, including, but not limited to pressing the keys of a mouse or keyboard, loading certain pages, performing transactions, performing data entry/output, performing other actions relating to online transactions and the like. A session is a set of such user actions which are limited by a certain framework - generally, a period of time. The period of time can be fixed (such as 10 minutes) or depend on certain parameters (e.g., the session time, dictated by the user entering and leaving the site).

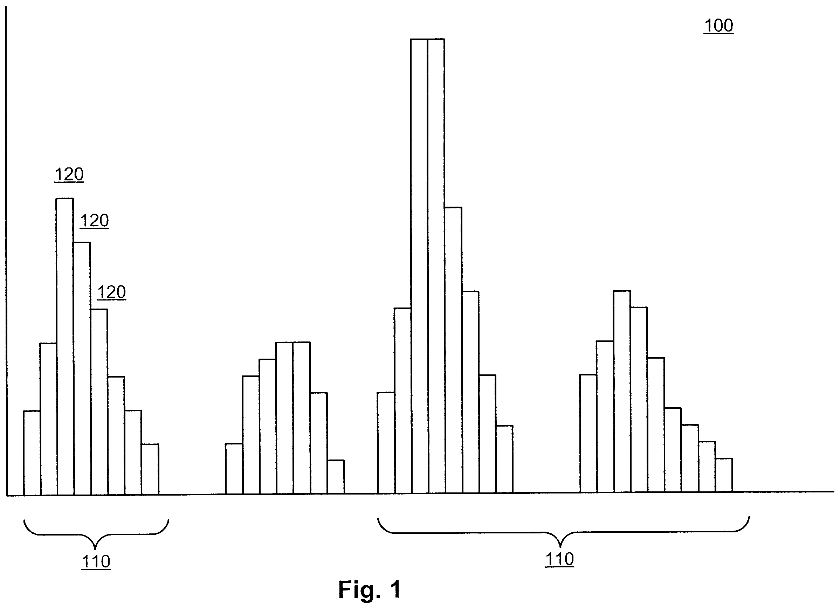

Fig. 1 illustrates a histogram of user actions for online transactions. As shown, the histogram 100 illustrates the number of user actions depending on time. For exemplary purposes, Fig. 1 assumes that the histogram 100 represents a single user session. In particular, each column 120 shows an exemplary number of actions in a given interval of time (e.g., one second). The set of columns 120 forms a frame 110, the size of which can vary. Thus, one skilled in the art would understand that a session can include several frames. For purposes of this disclosure, it is assumed that a session includes one or more frames 110. From the standpoint of analysis, frames 110 are used for the logic of identifying fraudulent transactions. In general, the system and method disclosed herein performs an analysis of events that occurs within a selected frame 110 for identification of deviations (e.g., anomalies), which, in turn, can be interpreted as fraudulent transactions performed by a malicious program (i.e., malware).

The disclosed system and method solves the problem of selecting the size of the frame 110 so as to eliminate possible false positives connected with the user's actions.

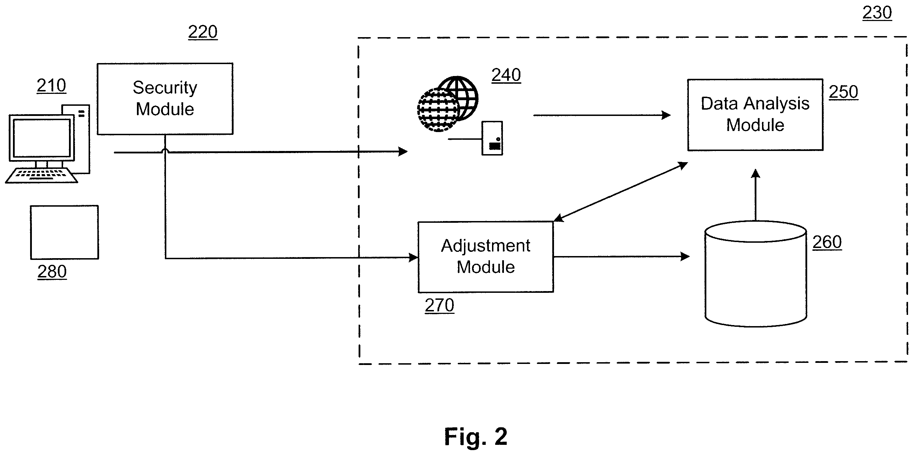

Fig. 2 illustrates an exemplary system 230 for identifying false positives during detection of fraudulent online transactions. In one example, a malicious program 280 may be installed on a user's computer 210, which can perform one or more fraudulent transactions from the user's computer 210 without the user's knowledge. Transactional data is then transmitted to a web service 240 of a bank or payment service, where it will normally be processed to execute the transaction at the server end (backend, not shown in Fig. 2). To evaluate the transaction from the standpoint of a fraudulent action, the transactional data, which may include user actions data and/or malware actions data, is provided to a data analysis module 250 that uses rules from a rules database 260 to detect a fraudulent transaction.

It is contemplated that the methods of detection are similar to those discussed above and are based on data such as the number of actions performed in a unit of time. In general, fraudulent transactions are characterized by a number of anomalies as compared to the usual transactions performed by a person. For example, a person enters data on the transaction for a rather long time by using the mouse to switch between elements of the data entry window and the like. In contrast, Trojan horse programs using fraudulent methods of data entry are generally different than a user transaction, for example, during their execution, there is no actual data entry from mouse or keyboard, the data entry is rather fast, and the like. The data analysis module 250 can determine these differences to detect a possible fraudulent transaction.

On the other hand, it is certainly possible that there can be false positives when, for example, a poorly adjusted data analysis module or incorrect rules for detecting a fraudulent transaction block a transaction from user if the user's actions resemble a possible fraudulent transaction. In order to eliminate or reduce false positives, system 230 includes an adjustment module 270 that is configured to change the operating parameters of the data analysis module 250 or the database 260.

In one example, a security module 220, such as antivirus software, is also installed on the computer 210, which transmits additional information about the user transaction to the adjustment module 270. The security module 220 is generally configured to detect a malicious program 280 as would be understood to one skilled in the art, but this detection is not always possible when the antivirus databases is not updated in the security module 220 or the modules for their detection are switched off.

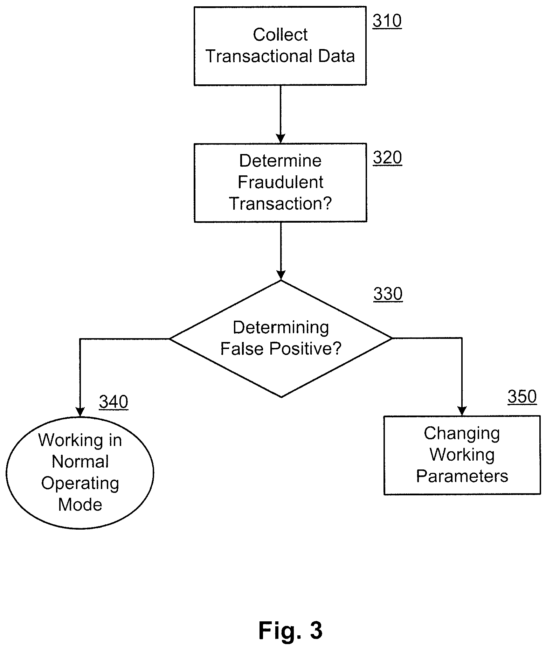

Fig. 3 illustrates an exemplary method of identifying false positives during detection of fraudulent transactions. As shown, in step 310, transactional data is collected during the transaction. Based on the collected data, one or more possible fraudulent transactions are determined in step 320. Next, in step 330, the method checks the possibility of a false positive based on the transactional data. If no false positive is identified, the system continues operating in normal mode in step 340, which can include repeating steps 310-330 as a loop. In the event a false positive is identified, the system is configured to change the operating parameters in step 350. The details of the steps shown in Fig. 3 will be discussed next.

According to an exemplary aspect, step 310 may include obtaining information from the user's computer 210 and/or from the web service 240 of the bank in conjunction with the data analysis module 250. The data can be collected within one or more frames 110 and can include, but is not limited to: (i) the number of activations of keys on the keyboard or buttons of the mouse; (ii) the trajectory of movement of the mouse or track ball; (iii) the downloading of web pages; (iv) the frequency (speed) of clicking on links on the web pages; and (v) peculiarities of the data entry by the user (e.g., a pause between key strokes, presence and correction of errors during entry, features of using the mouse and filling out data entry fields on the web page and the like.

As described above, this data (which can be considered user actions or events) is input into the algorithms for determining fraudulent transactions. As described above, there are many known algorithms for detection of fraudulent transactions that operate in a similar manner, which is based on identification of anomalies in the set of data entered, when a transaction from a malicious program will differ from a transaction executed by an actual computer user. Examples of such algorithms for detection of fraudulent transactions are disclosed in US Pat. 8,650,080 and US Pub. 2012/0204257 However, as described above, these algorithms for detection of fraudulent transactions are not immune to false positives. In other words, the algorithm may mistakenly identify a legitimate electronic transaction as fraudulent. This may happen, for example, when specific behavior of a user in the data entry during the transaction might be partially similar to the working model of a malicious program, which may cause the transaction to be identified as fraudulent and blocked by the data analysis module 250. To correct these mistakes, the disclosed method identifies in step 330 false positives (i.e., legitimate electronic transaction that were identified as fraudulent).

In various examples, false positives may be identified in different ways: (i) receiving a notification from the user of the computer 210 with information about failed electronic transaction, which helps to identify the transaction as legitimate; (ii) receiving a notification from the security module 220 that the fraudulent transaction is in fact legitimate and safe; and other methods known to those of ordinary skill in the art.

When a false positive is detected, the system 230 is configured to change the working parameters of the above-indicated algorithm(s) for detection of fraudulent transactions performed in step 350. In one example, the working parameters may be changed by changing the size of the frames 110 depending on the number of events.

In one example, the training of the algorithms may include: collecting data on the sessions (for example, duration); calculating an average value for the frame 110 (e.g., average duration of a session divided by the average number of events during the session); calculating a minimum value for the frame 110 (e.g., dividing minimum duration of the session by the minimum number of events during the session); calculating the reciprocals of the average and the minimum values for the frame 110; and the updating the frame size 110 as the average value of two calculated reciprocals.

In another example, the training of the algorithms may include: dividing a session into several frames 110 of equal duration; counting the number of events in each frame 110; calculating the average value and the dispersion of the number of events in each column 120; and calculating the cost function according to the following equation:

$$C_n(\Delta) = \frac{2k - v}{(n\Delta)^2},$$

where $k$ is the average value, $v$ is the dispersion, $\Delta$ is the frame size, and $n$ is the number of training sessions. Once the cost function is calculated, the frame size 110 is then changed to minimize the cost function.

In another example, the training of the algorithms may include: taking the entire session as one frame 110; counting the number of events in the frame 110; if the number of events is more than 0, dividing the frame into two equal frames; repeating the preceding step until the number of events in one of the frames becomes equal to 0; and choosing the frame size on the basis of the preceding frame division iteration.

In another example, after the frame size 110 is selected/updated, the system 230 for identifying false positives in detected fraudulent transactions continues operation until a new false positive is detected. In another example, the system can detect false positives based on the accumulation of a certain number of previous false positives. In yet another example, the disclosed system 230 can perform the steps illustrated in Fig. 3 only after the ratio of false positives to the total number of fraudulent transactions detected exceeds a certain threshold (e.g., 0.01).

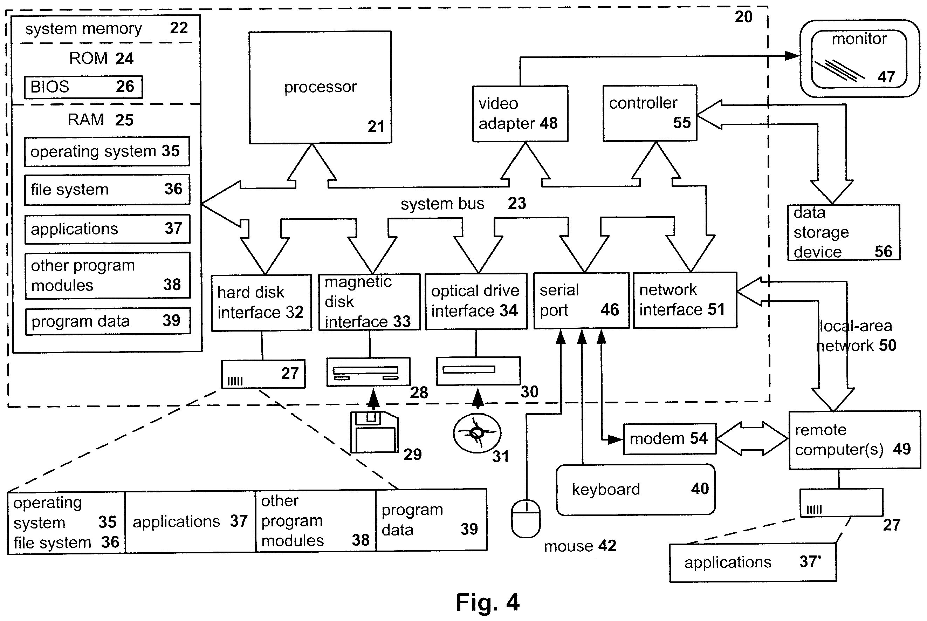

Fig. 4 illustrates an example of a general-purpose computer system (which may be a personal computer or a server) on which the disclosed systems and method can be implemented according to an example aspect. The computer system 20 includes a central processing unit 21, a system memory 22 and a system bus 23 connecting the various system components, including the memory associated with the central processing unit 21. The system bus 23 is realized like any bus structure known from the prior art, including in turn a bus memory or bus memory controller, a peripheral bus and a local bus, which is able to interact with any other bus architecture. The system memory includes read only memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is kept, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, with the aid of a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to work in a network environment, using a network connection to one or more remote computers 49. The remote computer (or computers) 49 are also personal computers or servers having the majority or all of the aforementioned elements in describing the nature of a personal computer 20, as shown in Fig. 4. Other devices can also be present in the computer network, such as routers, network stations, peer devices or other network nodes.

Network connections can form a local-area computer network (LAN) 50, such as a wired and/or wireless network, and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules, such as Bluetooth.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods are described in the present disclosure in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 3 above). Accordingly, each module can be realized in a variety of suitable configurations, and should not be limited to any example implementation exemplified herein.

In the interest of clarity, not all of the routine features of the aspects are disclosed herein. It will be appreciated that in the development of any actual implementation of the present disclosure, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

**Claims**

1. A method for detecting fraudulent transactions, the method comprising:

   receiving, by a communication interface, data relating to a plurality of sessions including at least an electronic transaction, wherein the data includes at least one of user actions data and malware actions data;

   analyzing, by a hardware processor, the data to determine (320) whether the electronic transaction is a possible fraudulent transaction based on a predetermined algorithm stored in an electronic memory, wherein the predetermined algorithm analyzes the data related to events occurring within a selected frame, wherein a frame size comprises an operating parameter of the predetermined algorithm specifying a duration of the frame;

   determining, by the hardware processor, whether the possible fraudulent transaction is a legitimate electronic transaction;

   adjusting, by the hardware processor, operating parameters of the predetermined algorithm using the received data when the hardware processor determines (320) that the possible fraudulent transaction is a legitimate electronic transaction;

   analyzing, by the hardware processor, next data to determine (320) whether another electronic transaction is a possible fraudulent transaction based on the predetermined algorithm having the adjusted operating parameters;

   **characterized in that**

   adjusting, by the hardware processor, the operating parameters using the received data comprises modifying the frame size by:

      calculating an average frame value by dividing an average duration of the plurality of sessions by an average number of events during the sessions; calculating a minimum frame value by dividing a minimum duration of the plurality of sessions by a minimum number of events during the sessions;

      calculating a reciprocal of the average frame value and a reciprocal of the minimum frame value; and

      updating the frame size used by the predetermined algorithm as an average of the calculated reciprocal of the average frame value and the calculated reciprocal of the minimum frame value.

2. The method of claim 1, wherein the data relating to the plurality of sessions including the electronic transaction is the number of events performed by the computer (210) executing the requested electronic transaction.

3. The method of claim 2, wherein the events performed by the computer (210) include at least one of a number of activations of keys on a keyboard (40), a number of activations of buttons of a computer mouse (42), a trajectory of movement of the mouse (42) or a track ball, downloading of web pages, a frequency of selecting links on the web pages, a timing of keystrokes, and a presence and correction of errors during keystrokes.

4. The method of claim 1, wherein adjusting the operating parameters further comprises:

dividing time of the electronic transaction performed by the computer (210) into a plurality of frames (110) of equal duration;
counting the number of events in each of the plurality of frames (110);
calculating an average value and a dispersion of the number of events in each of the plurality of frames (110);
calculating a cost function according to the following formula:

$$C_n(\Delta) = \frac{2k - v}{(n\Delta)^2},$$

wherein k is the average value, v is the dispersion, $\Delta$ is the frame size expressing the duration of each of the plurality of frames (110), and n is a number of adjustments to the predetermined algorithm; and
updating the frame size to minimize the calculated cost function.

5. The method of claim 1, wherein adjusting the operating parameters further comprises:

setting a time of the electronic transaction performed by the computer (210) as a single frame (110);
counting the number of events in the single frame (110);
if the number of events is greater than 0, dividing the single frame (110) into two equal frames;
continuously dividing each of the two equal frames into two additional equal frames, respectively, until one of the additional equal frames has zero number of events; and
updating the frame size based on a frame size of the one of the additional equal frames that has zero number of events.

6. A system for detecting fraudulent transactions, the system comprising:

a communication interface configured to data relating to a plurality of sessions including at least an electronic transaction, wherein the data includes at least one of user actions data and malware actions data; and

a hardware processor (21) configured to:

analyze the data to determine whether the electronic transaction is a possible fraudulent transaction based on a predetermined algorithm stored in an electronic memory, wherein the predetermined algorithm analyzes the data related to events occurring within a selected frame (110), wherein a frame size comprises an operating parameter of the predetermined algorithm specifying a duration of the frame (110);
determine whether the possible fraudulent transaction is a legitimate electronic transaction;
adjust operating parameters of the predetermined algorithm using the received data if the hardware processor (21) determines that the possible fraudulent transaction is a legitimate electronic transaction;
analyze next data to determine (320) whether another electronic transaction is a possible fraudulent transaction based on the predetermined algorithm having the adjusted operating parameters;
**characterized by**
the hardware processor (21) being configured to adjust the operating parameters using the received data by modifying the frame size by:

calculating an average frame value by dividing an average duration of time of the plurality of sessions by an average number of events during the sessions;
calculating a minimum frame value by dividing a minimum duration of the plurality of sessions by a minimum number of events during the sessions;
calculating a reciprocal of the average frame value and a reciprocal of the minimum frame value; and

updating the frame size used by the predetermined algorithm as an average of the calculated reciprocal of the average frame value and the calculated reciprocal of the minimum frame value.

7. The system of claim 6, wherein the data relating to the plurality of sessions including the electronic transaction is the number of events performed by the computer (210) executing the requested electronic transaction during a session, the session including at least one frame (110).

8. The system of claim 7, wherein the events performed by the computer (210) can include at least one of a number of activations of keys on a keyboard (40), a number of activations of buttons of a computer mouse (42), a trajectory of movement of the mouse (42) or a track ball, downloading of web pages, a frequency of selecting links on the web pages, a timing of keystrokes, and a presence and correction of errors during keystrokes.

9. The system of claim 6, wherein the hardware processor (21) is further configured to adjust the operating parameters by:

dividing time of the electronic transaction performed by the computer (210) into a plurality of frames (110) of equal duration;
counting the number of events in each of the plurality of frames (110);
calculating an average value and a dispersion of the number of events in each of the plurality of frames (110);
calculating a cost function according to the following formula:

$$C_n(\Delta) = \frac{2k - v}{(n\Delta)^2},$$

wherein $k$ is the average value, $v$ is the dispersion, $\Delta$ is the frame size expressing the duration of each of the plurality of frames (110), and $n$ is a number of adjustments to the predetermined algorithm; and
updating the frame size to minimize the calculated cost function.

10. The system of claim 6, wherein the hardware processor (21) is further configured to adjust the operating parameters by:

setting a time of the electronic transaction performed by the computer (210) as a single frame (110);
counting the number of events in the single frame (110);
if the number of events is greater than 0, dividing the single frame (110) into two equal frames;
continuously dividing each of the two equal frames into two additional equal frames, respectively, until one of the additional equal frames has zero number of events; and
updating the frame size based on a frame size of the one of the additional equal frames that has zero number of events.

11. A computer program product stored on a non-transitory computer-readable storage medium, the computer program product comprising computer-executable instructions for performing the method steps of claims 1-5.

**Patentansprüche**

1. Verfahren zum Detektieren betrügerischer Transaktionen, wobei das Verfahren umfasst:

Empfangen, durch eine Kommunikationsschnittstelle, von Daten bezüglich einer Vielzahl von Sitzungen, die wenigstens eine elektronische Transaktion umfassen, wobei die Daten Benutzeraktionendaten und/oder Schadsoftwareaktionendaten umfassen;
Analysieren, durch einen Hardware-Prozessor, der Daten, um zu bestimmen (320), ob die elektronische Transaktion eine mögliche betrügerische Transaktion ist, basierend auf einem in einem elektronischen Speicher gespeicherten vorgegebenen Algorithmus, wobei der vorgegebene Algorithmus die Daten bezüglich Ereignissen analysiert, die innerhalb eines ausgewählten Rahmens stattfinden, wobei eine Rahmengröße einen Betriebsparameter des vorgegebenen Algorithmus umfasst, der eine Dauer des Rahmens spezifiziert;
Bestimmen, durch den Hardware-Prozessor, ob die mögliche betrügerische Transaktion eine legitime elektronische Transaktion ist;
Einstellen, durch den Hardware-Prozessor, von Betriebsparametern des vorgegebenen Algorithmus unter Verwendung der empfangenen Daten, wenn der Hardware-Prozessor bestimmt (320), dass die mögliche betrügerische Transaktion eine legitime elektronische Transaktion ist;
Analysieren, durch den Hardware-Prozessor, von nächsten Daten, um zu bestimmen (230), ob eine weitere elektronische Transaktion eine mögliche betrügerische Transaktion ist, basierend auf dem vorgegebenen Algorithmus, der die angepassten Betriebsparameter aufweist;
**dadurch gekennzeichnet, dass**
das Einstellen, durch den Hardware-Prozessor, der Betriebsparameter unter Verwendung der empfangenen Daten ein Modifizieren der Rahmengröße umfasst durch:

Berechnen eines durchschnittlichen Rahmenwerts durch Teilen einer durchschnittlichen Dauer der Vielzahl von Sitzungen durch eine durchschnittliche Anzahl von Ereignissen während der Sitzungen; und
Berechnen eines minimalen Rahmenwerts durch Teilen einer minimalen Dauer der Vielzahl von Sitzungen durch eine minimale Anzahl von Ereignissen während der Sitzungen;

Berechnen eines Kehrwerts des durchschnittlichen Rahmenwerts und eines Kehrwerts des minimalen Rahmenwerts; und Aktualisieren der durch den vorgegebenen Algorithmus verwendeten Rahmengröße als Durchschnitt des berechneten Kehrwerts des durchschnittlichen Rahmenwerts und des berechneten Kehrwerts des minimalen Rahmenwerts.

2. Verfahren nach Anspruch 1, wobei die Daten bezüglich der Vielzahl von Sitzungen, die die elektrische Transaktion umfassen, die Anzahl von Ereignissen ist, die durch den Computer (210) durchgeführt wurden, der die angeforderte elektronische Transaktion ausführt.

3. Verfahren nach Anspruch 2, wobei die durch den Computer (210) durchgeführten Ereignisse eine Anzahl von Tastenbetätigungen auf einem Keyboard (40), eine Anzahl von Tastenbetätigungen einer Computermaus (42), eine Bewegungsbahn der Maus (42) oder eines Trackballs, ein Herunterladen von Webseiten, eine Häufigkeit eines Auswählens von Links auf den Webseiten, eine zeitliche Abfolge von Tastenanschlägen, und/oder ein Vorhandenseins und eine Korrektur von Fehlern während Tastenanschlägen umfassen.

4. Verfahren nach Anspruch 1, wobei das Einstellen der Betriebsparameter ferner umfasst:

Teilen einer Zeit der durch den Computer (210) durchgeführten elektronischen Transaktion in eine Vielzahl von Rahmen (110) gleicher Dauer; Zählen der Anzahl von Ereignissen in jedem der Vielzahl von Rahmen (110); Berechnen eines durchschnittlichen Werts und einer Streuung der Anzahl von Ereignissen in jedem der Vielzahl von Rahmen (110); Berechnen einer Kostenfunktion gemäß der folgenden Formel:

$$C_n(\Delta) = \frac{2k - v}{(n\Delta)^2},$$

wobei k der durchschnittliche Wert ist, v die Streuung ist, $\Delta$ die Rahmengröße ist, die die Dauer von jedem der Vielzahl von Rahmen (110) ausdrückt, und n eine Anzahl von Einstellungen an dem vorgegebenen Algorithmus umfasst; und Aktualisieren der Rahmengröße, um die berechnete Kostenfuktion zu minimieren.

5. Verfahren nach Anspruch 1, wobei das Einstellen der Betriebsparameter ferner umfasst:

Einstellen einer Zeit der durch den Computer (210) durchgeführten elektronischen Transaktion als Einzelrahmen (110); Zählen der Anzahl von Ereignissen in dem Einzelrahmen (110); falls die Anzahl von Ereignissen größer als 0 ist, Teilen des Einzelrahmens (110) in zwei gleiche Rahmen; kontinuierliches Teilen jedes der zwei gleichen Rahmen jeweils in zwei zusätzliche gleiche Rahmen, bis einer der zusätzlichen gleichen Rahmen eine Nullanzahl von Ereignissen aufweist; und Aktualisieren der Rahmengröße basierend auf einer Rahmengröße des einen der zusätzlichen gleichen Rahmen, der eine Nullanzahl von Ereignissen aufweist.

6. System zum Detektieren betrügerischer Transaktionen, wobei das System umfasst:

eine Kommunikationsschnittstelle, die für Daten bezüglich einer Vielzahl von Sitzungen konfiguriert ist, die wenigstens eine elektronische Transaktion umfassen, wobei die Daten Benutzeraktionendaten und/oder Schadsoftwareaktionendaten umfassen; und einen Hardware-Prozessor (21), der dazu konfiguriert ist:

die Daten zu analysieren, um zu bestimmen, ob die elektronische Transaktion eine mögliche betrügerische Transaktion ist, basierend auf einem in einem elektronischen Speicher gespeicherten vorgegebenen Algorithmus, wobei der vorgegebene Algorithmus die Daten bezüglich Ereignissen analysiert, die innerhalb eines ausgewählten Rahmens (110) stattfinden, wobei eine Rahmengröße einen Betriebsparameter des vorgegebenen Algorithmus umfasst, der eine Dauer des Rahmens (110) spezifiziert; zu bestimmen, ob die mögliche betrügerische Transaktion eine legitime elektronische Transaktion ist; Betriebsparameter des vorgegebenen Algorithmus unter Verwendung der empfangenen Daten einzustellen, wenn der Hardware-Prozessor (21) bestimmt, dass die mögliche betrügerische Transaktion eine legitime elektronische Transaktion ist; nächste Daten zu analysieren, um zu bestimmen (230), ob eine weitere elektronische Transaktion eine mögliche betrügerische Transaktion ist, basierend auf dem vorgegebenen Algorithmus, der die angepassten Betriebsparameter aufweist; **dadurch gekennzeichnet, dass** der Hardware-Prozessor (21) dazu konfiguriert ist, die Betriebsparameter unter Verwendung der empfangenen Daten durch Modifizieren der Rahmengröße einzustellen durch:

Berechnen eines durchschnittlichen Rahmenwerts durch Teilen einer durchschnittlichen Zeitdauer der Vielzahl von Sitzungen durch eine durchschnittliche Anzahl von Ereignissen während der Sitzungen;
Berechnen eines minimalen Rahmenwerts durch Teilen einer minimalen Zeitdauer der Vielzahl von Sitzungen durch eine minimale Anzahl von Ereignissen während der Sitzungen;
Berechnen eines Kehrwerts des durchschnittlichen Rahmenwerts und eines Kehrwerts des minimalen Rahmenwerts; und
Aktualisieren der durch den vorgegebenen Algorithmus verwendeten Rahmengröße als Durchschnitt des berechneten Kehrwerts des durchschnittlichen Rahmenwerts und des berechneten Kehrwerts des minimalen Rahmenwerts.

7. System nach Anspruch 6, wobei die Daten bezüglich der Vielzahl von Sitzungen, die die elektrische Transaktion umfassen, die Anzahl von Ereignissen ist, die durch den Computer (210) durchgeführt wurden, der die angeforderte elektronische Transaktion während einer Sitzung ausführt, wobei die Sitzung wenigstens einen Rahmen (110) umfasst.

8. System nach Anspruch 7, wobei die durch den Computer (210) durchgeführten Ereignisse eine Anzahl von Tastenbetätigungen auf einem Keyboard (40), eine Anzahl von Tastenbetätigungen einer Computermaus (42), eine Bewegungsbahn der Maus (42) oder eines Trackballs, ein Herunterladen von Webseiten, eine Häufigkeit eines Auswählens von Links auf den Webseiten, eine zeitliche Abfolge von Tastenanschlägen, und/oder ein Vorhandenseins und eine Korrektur von Fehlern während Tastenanschlägen umfassen.

9. System nach Anspruch 6, wobei der Hardware-Prozessor (21) ferner dazu konfiguriert ist, die Betriebsparameter einzustellen durch:

Teilen einer Zeit der durch den Computer (210) durchgeführten elektronischen Transaktion in eine Vielzahl von Rahmen (110) gleicher Dauer;
Zählen der Anzahl von Ereignissen in jedem der Vielzahl von Rahmen (110);
Berechnen eines durchschnittlichen Werts und einer Streuung der Anzahl von Ereignissen in jedem der Vielzahl von Rahmen (110);
Berechnen einer Kostenfunktion gemäß der folgenden Formel:

$$C_n(\Delta) = \frac{2k - v}{(n\Delta)^2},$$

wobei k der durchschnittliche Wert ist, v die Streuung ist, $\Delta$ die Rahmengröße ist, die die Dauer von jedem der Vielzahl von Rahmen (110) ausdrückt, und n eine Anzahl von Einstellungen an dem vorgegebenen Algorithmus umfasst; und
Aktualisieren der Rahmengröße, um die berechnete Kostenfuktion zu minimieren.

10. System nach Anspruch 6, wobei der Hardware-Prozessor (21) ferner dazu konfiguriert ist, die Betriebsparameter einzustellen durch:

Einstellen einer Zeit der durch den Computer (210) durchgeführten elektronischen Transaktion als Einzelrahmen (110);
Zählen der Anzahl von Ereignissen in dem Einzelrahmen (110);
falls die Anzahl von Ereignissen größer als 0 ist, Teilen des Einzelrahmens (110) in zwei gleiche Rahmen;
kontinuierliches Teilen jedes der zwei gleichen Rahmen jeweils in zwei zusätzliche gleiche Rahmen, bis einer der zusätzlichen gleichen Rahmen eine Nullanzahl von Ereignissen aufweist; und
Aktualisieren der Rahmengröße basierend auf einer Rahmengröße des einen der zusätzlichen gleichen Rahmen, der eine Nullanzahl von Ereignissen aufweist.

11. Computerprogrammprodukt, das auf einem nichtflüchtigen computerlesbaren Speichermedium gespeichert ist, wobei das Computerprogrammprodukt, computerausführbare Instruktionen zum Durchführen der Verfahrensschritte der Ansprüche 1-5 umfasst.

**Revendications**

1. Procédé de détection de transactions frauduleuses, le procédé consistant à :

recevoir, grâce à une interface de communication, des données relatives à une pluralité de sessions comprenant au moins une transaction électronique, dans lequel les données comprennent au moins des données parmi des données d'actions d'utilisateurs et des données d'actions de logiciels malveillants ;

analyser, grâce à un processeur de matériel, les données pour déterminer (320) si la transaction électronique est une transaction frauduleuse possible sur la base d'un algorithme prédéterminé stocké dans une mémoire électronique, dans lequel l'algorithme prédéterminé analyse les données liées à des événements se produisant dans une trame sélectionnée, dans lequel une taille de trame comprend un paramètre de fonctionnement de l'algorithme prédéterminé spécifiant une durée de la trame ;

déterminer, grâce au processeur de matériel, si la transaction frauduleuse possible est une transaction électronique légitime ;

régler, grâce au processeur de matériel, des paramètres de fonctionnement de l'algorithme prédéterminé à l'aide des données reçues lorsque le processeur de matériel détermine (320) que la transaction frauduleuse possible est une transaction électronique légitime ;

analyser, grâce au processeur de matériel, des prochaines données pour déterminer (320) si une autre transaction électronique est une transaction frauduleuse possible sur la base de l'algorithme prédéterminé ayant les paramètres de fonctionnement réglés ;

**caractérisé en ce que**

régler, grâce au processeur de matériel, les paramètres de fonctionnement à l'aide des données reçues consiste à modifier la taille de la trame en :

    calculant une valeur de trame moyenne en divisant une durée moyenne de la pluralité de sessions par un nombre moyen d'événements pendant les sessions ; et en

    calculant une valeur de trame minimum en divisant une durée minimum de la pluralité de sessions par un nombre minimum d'événements pendant les sessions ;

    calculant une réciproque de la valeur de trame moyenne et une réciproque de la valeur de trame minimum ; et en

    mettant à jour la taille de la trame utilisée par l'algorithme prédéterminé comme une moyenne de la réciproque calculée de la valeur de trame moyenne et de la réciproque calculée de la valeur de trame minimum.

2. Procédé selon la revendication 1, dans lequel les données relatives à la pluralité de sessions comprenant la transaction électronique constituent le nombre d'événements exécutés par l'ordinateur (210) exécutant la transaction électronique demandée.

3. Procédé selon la revendication 2, dans lequel les événements exécutés par l'ordinateur (210) comprennent au moins un élément parmi un nombre d'activations de touches sur un clavier (40), un nombre d'activations de boutons d'une souris informatique (42), une trajectoire du mouvement de la souris (42) ou d'une boule de commande, le téléchargement de pages Web, une fréquence des liaisons de sélection sur les pages Web, une synchronisation des frappes de touches, et une présence et une correction d'erreurs pendant les frappes de touches.

4. Procédé selon la revendication 1, dans lequel régler les paramètres de fonctionnement consiste à :

    diviser un temps de la transaction électronique exécutée par l'ordinateur (210) en une pluralité de trames (110) de durée égale ;

    compter le nombre d'événements dans chacune de la pluralité de trames (110) ;

    calculer une valeur moyenne et une dispersion du nombre d'événements dans chacune de la pluralité de trames (110) ;

    calculer une fonction de coût en fonction de la formule suivante :

$$C_n(\Delta) = \frac{2k - v}{(n\Delta)^2}$$

    dans laquelle k est la valeur moyenne, v est la dispersion, $\Delta$ est la taille de trame exprimant la durée de chacune de la pluralité de trames (110), et *n* est un nombre de réglages de l'algorithme prédéterminé ; et

    mettre à jour la taille de la trame pour minimiser la fonction de coût calculée.

5. Procédé selon la revendication 1, dans lequel régler les paramètres de fonctionnement consiste en outre à :

    définir une heure de la transaction électronique exécutée par l'ordinateur (210) en tant que trame unique (110) ;

    compter le nombre d'événements dans la trame unique (110) ;

    si le nombre d'événements est supérieur à 0, diviser la trame unique (110) en deux trames égales ;

    diviser en continu chacune des deux trames égales en deux trames égales supplémentaires, respectivement, jusqu'à ce qu'une des trames égales supplémentaires possède un nombre nul d'événements ; et

mettre à jour la taille de la trame sur la base d'une taille de trame de l'une des trames égales supplémentaires qui possède un nombre nul d'événements.

6. Système de détection de transactions frauduleuses, le système comprenant :

une interface de communication configurée pour des données relatives à une pluralité de sessions comprenant au moins une transaction électronique, dans lequel les données comprennent au moins des données parmi des données d'actions d'utilisateurs et des données d'actions de logiciels malveillants ; et
un processeur de matériel (21) configuré pour :

analyser les données pour déterminer si la transaction électronique est une transaction frauduleuse possible sur la base d'un algorithme prédéterminé stocké dans une mémoire électronique, dans lequel l'algorithme prédéterminé analyse les données liées à des événements se produisant dans une trame sélectionnée (110), dans lequel une taille de trame comprend un paramètre de fonctionnement de l'algorithme prédéterminé spécifiant une durée de la trame (110) ;
déterminer si la transaction frauduleuse possible est une transaction électronique légitime ;
régler des paramètres de fonctionnement de l'algorithme prédéterminé à l'aide des données reçues si le processeur de matériel (21) détermine que la transaction frauduleuse possible est une transaction électronique légitime ;
analyser des prochaines données pour déterminer (320) si une autre transaction électronique est une transaction frauduleuse possible sur la base de l'algorithme prédéterminé ayant les paramètres de fonctionnement réglés ;
**caractérisé en ce que**
le processeur de matériel (21) étant configuré pour régler les paramètres de fonctionnement à l'aide des données reçues par modification de la taille de la trame en :

calculant une valeur de trame moyenne en divisant une durée moyenne d'un temps de la pluralité de sessions par un nombre moyen d'événements pendant les sessions;

calculer une valeur de trame minimum en divisant une durée minimum de la pluralité de sessions par un nombre minimum d'événements pendant les sessions ;
calculer une réciproque de la valeur de trame moyenne et une réciproque de la valeur de trame minimum ; et
mettre à jour la taille de la trame utilisée par l'algorithme prédéterminé comme une moyenne de la réciproque calculée de la valeur de trame moyenne et de la réciproque calculée de la valeur de trame minimum.

7. Système selon la revendication 6, dans lequel les données relatives à la pluralité de sessions comprenant la transaction électronique constituent le nombre d'événements exécutés par l'ordinateur (210) exécutant la transaction électronique demandée pendant une session, la session comprenant au moins une trame (110).

8. Système selon la revendication 7, dans lequel les événements exécutés par l'ordinateur (210) peuvent comprendre au moins un élément parmi un nombre d'activations de touches sur un clavier (40), un nombre d'activations de boutons d'une souris informatique (42), une trajectoire du mouvement de la souris (42) ou d'une boule de commande, le téléchargement de pages Web, une fréquence des liaisons de sélection sur les pages Web, une synchronisation des frappes de touches, et une présence et une correction d'erreurs pendant les frappes de touches.

9. Système selon la revendication 6, dans lequel le processeur de matériel (21) est configuré en outre pour régler les paramètres de fonctionnement en :

divisant un temps de la transaction électronique exécutée par l'ordinateur (210) en une pluralité de trames (110) de durée égale ;
comptant le nombre d'événements dans chacune de la pluralité de trames (110) ;
calculant une valeur moyenne et une dispersion du nombre d'événements dans chacune de la pluralité de trames (110) ;
calculant une fonction de coût en fonction de la formule suivante :

$$C_n(\Delta) = \frac{2k - v}{(n\Delta)^2}$$

dans laquelle $k$ est la valeur moyenne, $v$ est la dispersion, $\Delta$ est la taille de trame exprimant la durée de chacune de la pluralité de trames

**EP 3 059 694 B1**

(110), et $n$ est un nombre de réglages de l'algorithme prédéterminé ; et

mettre à jour la taille de la trame pour minimiser la fonction de coût calculée.

10. Système selon la revendication 6, dans lequel le processeur de matériel (21) est configuré en outre pour régler les paramètres de fonctionnement en :

définissant une heure de la transaction électronique exécutée par l'ordinateur (210) en tant que trame unique (110) ;

comptant le nombre d'événements dans la trame unique (110) ;

si le nombre d'événements est supérieur à 0, diviser la trame unique (110) en deux trames égales ;

divisant en continu chacune des deux trames égales en deux trames égales supplémentaires, respectivement, jusqu'à ce qu'une des trames égales supplémentaires possède un nombre nul d'événements ; et

mettant à jour la taille de la trame sur la base d'une taille de trame de l'une des trames égales supplémentaires qui possède un nombre nul d'événements.

11. Produit de programme informatique stocké sur un support de stockage lisible par ordinateur non transitoire, le produit de programme informatique comprenant des instructions pouvant être exécutées sur un ordinateur permettant de mettre en oeuvre les étapes du procédé selon les revendications 1 à 5.

**Fig. 1**

Fig. 2

Collect
Transactional Data
_310_

Determine
Fraudulent
Transaction?
_320_

_330_
Determining
False Positive?

_340_
Working in
Normal
Operating
Mode

_350_
Changing
Working
Parameters

# Fig. 3

**Fig. 4**

**EP 3 059 694 B1**